# EUROPEAN PATENT APPLICATION

(11) **EP 4 661 225 A1**
(43) Date of publication of application: **10.12.2025**
(21) Application number: 25180369.8
(22) Date of filing: 03.06.2025
(51) Int. Cl.: H02G 1/10, F03D 80/80, H02G 15/007, H02G 15/013

(54) **HANG-OFF ASSEMBLY FOR POWER CABLES, HANG-OFF SYSTEM AND METHOD FOR MOUNTING SUCH A HANG-OFF SYSTEM**

(30) Priority: 04.06.2024 IT 202400012700
(71) Applicant: Prysmian S.p.A., 20126 Milan (IT)
(72) Inventor: YOUSEFI, Mohammad Kia, 20125 Milano (MI) (IT); BOFFI, Paolo, 20125 Milano (MI) (IT); POGLIANI, Stefano, 20125 Milano (MI) (IT)
(74) Representative: Biallo, Dario

(57) **Abstract**

Hang-off assembly (200) for power cable (100) comprising at least one cable core (110) and at least one protecting layer (120, 160) radially external to the at least one cable core (110), the hang-off system (200) comprising:
- a frusto-conical tube (210) configured to be arranged around a length of the power cable where the at least one cores are exposed, the frusto-conical tube (210) being made of two half-shells (211, 212) coupled to each other and defining a first opening (213) and a second opening (214) opposite to the each other wherein the first opening (213) is circumferentially smaller than the second opening (214);
- a self-curing resin to be poured and cured between the frusto-conical tube (210) and the at least one cable core (110) of the power cable (100), adapted to adhere to the at least one cable core (110).

## Description

### Background of the disclosure

The present disclosure refers to a hang-off assembly for power cables, particularly but not exclusively suitable for underwater deployment.

The present disclosure regards also an hang-off system and a method for mounting such a hang-off system. Typically, a power cable includes at least one cable core usually formed by an electrically conductive metal conductor covered by an insulation system. The insulation system can be sequentially formed by an inner polymeric semiconductive layer, an intermediate polymeric insulating layer, and an outer polymeric semiconductive layer. The insulation system is usually then surrounded by a metallic screen generally made of lead and/or copper and, optionally, by a polymeric sheath which can be semiconductive. A bedding layer, for example made of wound polymeric yarns or tapes, may surround the at least one core. When the power cable comprises more than one cable core, e.g. three cable cores, the power cable may also comprise a filler material or shaped filling elements between the cores that are together surrounded by the bedding layer.

In any case the core/s is/are then surrounded by an armour which is designed in view of the intended application and which can be surrounded by a serving layer.

Such an armour may be made of one or more layers of metallic or polymeric wires helically wound around the cable core/s. The main function of the armour layers is to sustain the weight of the cable during installation, i.e., laying the cable from the vessel, and later during its operation to sustain the axial load exerted on the cable by water current and thermomechanical stresses. The armour wires are also used in anchoring the cable to the offshore structures (e.g., offshore platforms and wind turbines) through a winch lifting the submarine cable from the seabed and pulling it up to the connection to the electrical and mechanical components on the offshore structure. Once lifted, the cable is secured to a hang-off device anchoring the cable to the offshore structures at a certain height in order to avoid the movement of the cable due to its weight, sea currents and thermomechanical loads.

Known hang-off devices keep the cable in place and sustain its weight by clamping the armour wires with different techniques. For example, it is known to make a hang-off device comprising a flanged plate to be coupled to the cable and one or more annular ring intended to be coupled to each other and to the flanged plate that clamp between each other the armour wires of the cable. See, for example, WO 2020/084308 or GB2555113B.

These solutions are viable only with traditional armour layers made of metallic and/or polymeric wires. However new power cables are known which have armours made of at least one tape helically wound around the cable core/s and, accordingly, not suitable to be connected to the known hang-off devices. See, for example, the patent application EP24152413.1. CN215729022 relates to a dynamic submarine cable anchoring device including an anchoring body and baffle assemblies. One end of the anchoring body is provided with a cable hole, the other end of the anchoring body is provided with a cavity running through the other end of the anchoring body. The cavity communicates with the cable hole, the side wall of the cavity is used to abut against the umbrella-shaped armored steel wire. A fastening glue is provided between the side wall of the cavity and the armored steel wires, so as to prevent seawater from entering the interior of the dynamic submarine cable anchoring device to corrode the armored steel wire of the dynamic submarine cable. The fastening glue can be resin glue or other glues, and no specification is given herein.

US9847632 relates to a cable termination apparatus. In the past, a clamp or high strength epoxy or polyester resin has been used to hold the end connector to the cable. However, these arrangements are subject to slippage when high tensile forces are applied. The cable termination apparatus comprises
- first and second socket pieces being configured for selective mutual connection via the first and second socket joint features to collectively form a substantially cylindrical outer socket including a center bore;
- a frustoconical inner plug including a plurality of longitudinally extending, laterally separate plug subassemblies, the inner plug including an outer plug surface.

The inner plug may be a resin plug, cured in place. When the cable termination apparatus is attached to the cable, at least a portion of the plurality of cable strands are located laterally between the center bore and the outer plug surface. Tensile force exerted on the cable termination apparatus by the cable strands wedges the inner plug into the center bore.

### Summary of the disclosure

The Applicant faced the problem of providing a hang-off assembly also suitable for power cables with armours consisting of at least one helically wound tape.

Since such tape-formed armours might not provide a sufficient tensile strength, the Applicant thought to apply the hang-off assembly directly to the cable cores/s freed from any surrounding layer .

This has been quite a challenging plan for some reasons. First, the application of the hang-off assembly directly onto the cable core/s could unduly stress the conductor/s when the cable is hanged. Second, a traditional hang-off assembly cannot be of use in this case for two reasons: a helically wound tape cannot be be mechanically connected to a traditional device and even so, no significant mechanical resistance can be provided by this kind of armour.

The Applicant thought to provide a mould around a cable core/s longitudinal portion, the mould to be filled with a self-curing resin adhering to the cable core/s surface.

The selection of the resin presented the Applicant a challenge because the polymeric materials used for the cable core/s outer surface, i.e. the outer sheath, (generally, polyethylenes) are notoriously "difficult substrates" for adhesion. The resin should adhere and firmly attach to the power cable core/s. An adhesion between resin and mould might occur, but it is not mandatory to the aim of the present disclosure, as it will be apparent in the following of the description. The Applicant thought to use as a mould a frusto-conical tube with two opposite end portion, one with smaller diameter than the other, to provide the end portion with the smaller diameter in lower position with respect to the other end.

The Applicant perceived that, once poured into the mould positioned around the cable core/s and cured, the resin adheres to the cable core/s, takes the form of the mould and, as a result of the weight of the cable attached thereto, exerts a compressive force against the tapered surface of the mould, such force being suitable to vertically sustain the cable.

According to a first aspect, the present disclosure relates to a hang-off assembly for a power cable comprising at least one cable core and at least one protecting layer radially external to the at least one cable core, the hang-off assembly comprising:
- a frusto-conical tube configured to be arranged around a length of the power cable where the at least one cores are exposed, said frusto-conical tube being made of two half-shells coupled to each other and defining a first opening and a second opening opposite to the each other wherein the first opening is circumferentially smaller than the second opening;
- a self-curing resin to be poured and cured between the frusto-conical tube and the at least one cable core of the power cable, said self-curing resin being adapted to adhere to the at least one cable core.

The at least one cable core according to the present disclosure comprises an electrically conductive metal conductor covered by an insulation system sequentially formed by an inner polymeric semiconductive layer, an intermediate polymeric insulating layer, and an outer polymeric semiconductive layer. The insulation system is surrounded by a metallic screen and by a polymeric outer sheath which can be the outermost layer of the present cable core. In an embodiment, the power cable has three cable cores.

In the power cable according to the present disclosure, the at least one protecting layer radially external to the at least one cable core may be one or more of: at least one filler placed in the space between the cable cores and the layer/s surrounding them; a bedding layer; an armour surrounding the other protecting layer/s, if any present.

The armour may be made of metal or polymeric wires wound around the cable core/s or may consist of at least one tape helically wound around the cable core/s. In an embodiment, the armour consists of the at least one helically wound tape as just mentioned.

According to the present disclosure, the at least one cable core is said to be exposed once any of the at least one protecting layer radially external thereto are removed. The at least one protecting layer may be removed by cutting essentially perpendicularly to a longitudinal axis of the power cable and stripping off for a predetermined length. The resulting cut face of the at least one protecting layer may be substantially flat.

In an embodiment the hang-off assembly of the present disclosure further comprises an annular flange made of two curved portions. The annular flange is adapted to be operatively connected to an offshore structure and to the frusto-conical tube.

In an embodiment, the two curved portions of the annular flange are two semicircular portions.

In an embodiment the self-curing resin has a Shore D hardness of from 25 to 75 once cured, for example from 30 to 75 once cured.

In an embodiment, the self-curing resin is a polymeric resin. The resin can be a single-part or a two-part one. A polymeric resin suitable for the present disclosure may be selected, for example, from epoxy or polyurethane resins.

In an embodiment the two half-shells of the frusto-conical tube comprise respective flanges that allow the coupling between them.

In an embodiment, the frusto-conical tube of the present hang-off assembly further comprises a collar directly connected, e.g. by welding, to the first opening of the frusto-conical tube and longitudinally lower thereto. The collar clamps the power cable.

In an embodiment, when the frusto-conical tube comprises a collar, the annular flange, when present, may be provided around the collar and in contact to the first opening of the frusto-conical tube, or at a lower position with respect to the collar and operatively connected thereto.

In an embodiment alternative to the one providing a collar, the frusto-conical tube comprises a ring radially internal and welded to the first opening.

In a further aspect the present disclosure relates to a hang-off system comprising:
- a power cable comprising at least one cable core and at least one protecting layer radially external to the at least one cable core;
- a hang-off assembly according to the present disclosure applied to the power cable, wherein the frusto-conical tube is arranged around a length of the power cable where the at least one cores are exposed and the cured self-curing resin is arranged between the frusto-conical tube and the at least one cable core of the power cable, said cured self-curing resin adhering to the at least one cable core.

In a further aspect, the present disclosure relates to a method for mounting a hang-off system according to the present disclosure comprising the steps of:
- providing a power cable comprising at least one cable core comprising an outermost layer, and protecting layers surrounding the at least one cable core;
- exposing a length of the at least one cable core by removing the protecting layers to provide a cut face;
- holding the power cable along a substantially vertical axis;
- coupling two half-shells around the exposed length of the at least one cable core, thus obtaining a frusto-conical tube with a first opening at a lower height with respect to a second opening, the first opening being circumferentially smaller than the second opening;
- pouring an uncured self-curing resin between the frusto-conical tube and the exposed length at least one cable core of the power cable ;
- letting the resin to self-cure and adhere to the exposed length at least one cable core.

The step of holding the power cable may be carried by temporary fixtures such as chains and belts. The temporary fixtures may be removed after the installation of the hang-off of the present disclosure which is permanent.

In an embodiment, the present method comprises the step of providing an annular flange in operative connection to the frusto-conical tube. The annular flange can be provided before or after the step of exposing the cable core/s and/or before or after the step of coupling the two half-shells.

In an embodiment, before the coupling of the two half-shells said method comprises the step of:
- mechanically abrading the outermost layer of the least one cable core.

In an embodiment before the coupling of the two half-shells said method comprises the step of:
applying an acrylate primer on the outermost layer of the at least one cable core.

The step of applying the acrylate primer can be carried out after or alternatively to the abrading step.

In this way the adhesion with the self-curing resin can be improved.

In an embodiment, the method for mounting a hang-off system further comprises the step of providing a sealing element on the cable cut face at a lower portion of the exposed length of the at least one cable core . The sealing element can be provided before the coupling the two half-shells. The sealing element may be applied by spraying.

The step of pouring an uncured self-curing resin may entail the pouring of a single resin component or of two or more components of the resin.

For the purpose of the present description and of the claims that follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Also, the terms "a" and "an" are employed to describe elements and components of the disclosure. This is done merely for convenience and to give a general sense of the disclosure. This description should be read to include one or at least one, and the singular also includes the plural unless it is obvious that it is meant otherwise.

As "insulating layer" it is meant a layer made of a material having a conductivity comprised between 10⁻¹⁶ and 10⁻¹⁴ S/m.

As "semiconductive layer" it is meant a layer made of a material having a conductivity comprised between 10⁻¹ and 10 S/m.

The present disclosure, in at least one of the aforementioned aspects, can be implemented according to one or more of the present embodiments, optionally combined together.

### Brief description of the drawings

Further characteristics will be apparent from the detailed description given hereinafter with reference to the accompanying drawings, in which:
- Figures 1 is a schematic perspective view partially sectioned of a power cable which a hang-off assembly according to an embodiment of the present disclosure is applicable to;
- Figure 2a is a schematic perspective view partially sectioned of an embodiment of a hang-off system according to an embodiment of the present disclosure;
- Figure 2b is a cross-section schematic view of the hang-off system of figure 2a;
- Figure 2c is a schematic perspective view partially sectioned of a second embodiment of a hang-off system according to a further embodiment of the present disclosure;
- Figure 2d is a schematic perspective view partially sectioned of a further embodiment of a hang-off system according to an embodiment of the present disclosure;
- Figure 3 is a schematic exploded perspective view of a frusto-conical tube of the hang-off system of figures 2a-2d.

### Detailed description of some embodiments

With reference to the figures, a hang-off assembly 200 according to the present disclosure is schematically represented.

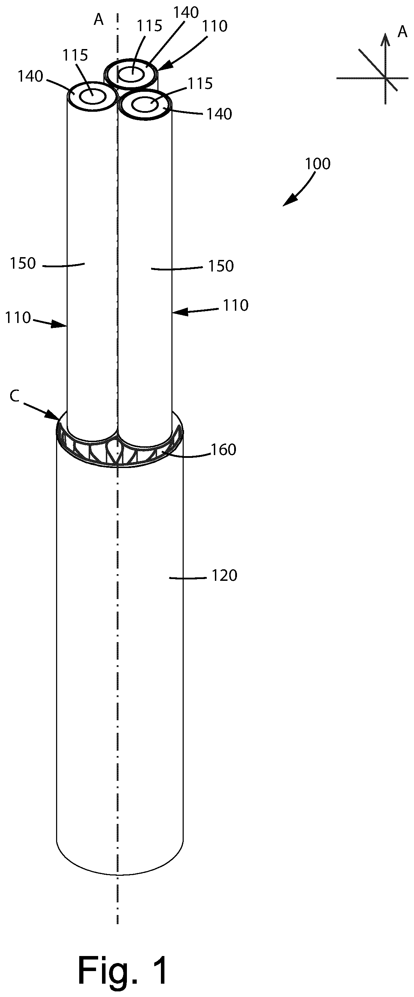

Such a hang-off assembly 200 can be used for a power cable 100 comprising at least one cable core 110 as from Figure 1.

When the hang-off assembly 200 is applied to the power cable 100 they form together a hang-off system.

In the illustrated embodiment the power cable 100 comprises three cable cores 110 twisted one another along a longitudinal axis (A).

In all embodiments each cable core 110 comprises one electric conductor 115 surrounded by a polymeric electrically insulating system 140. Each polymeric electrically insulating system 140 is sequentially formed by an inner polymeric semiconductive layer (not illustrated), a polymeric insulating layer (not illustrated), and an outer polymeric semiconductive layer (not illustrated).

Each cable core 110 comprises also a metallic screen (not illustrated) arranged in a radially outer position with respect to the outer polymeric semiconductive layer. An outer sheath 150, optionally semiconductive, is arranged as radially outermost layer of each cable core 110.

The power cable 100 can comprise also a bedding layer (not illustrated) surrounding the cable cores 110.

The power cable 100 may also comprise fillers 160 (in this case, three) placed in the space between the cable cores 110 and the layer/s surrounding them. The fillers 160 may be made of an extruded polymeric material or of polymeric filaments, or may be in form of three shaped elements each defining a plurality of spaces that can be used as seats for optical fiber cables.

The power cable 100 can comprise an armour 120. The armour may be made of metal or polymerc wires wound around the cable core/s or may consists of at least one tape helically wound surrounding the cable cores 110. In the present embodiment, the armour consists of the at least one helically wound tape just mentioned.

For example, the armour 120 may be made by at least one, for example two meshed tapes helically wound around the cable core/s 110. The meshed tape/s may be made of a metal; of a polymeric material such as polyester or polyethersulfone (PES); of an inorganic and non-metallic material such as glass or carbon fibre; of a natural material; or of a combination thereof.

According to the present disclosure, the fillers 160, the bedding and the armour 120 are protecting layers. The power cable 100 presents a length of exposed cable cores 110, obtained by removing all the protecting layers overlying the three cable cores 110; in the illustrated embodiment such length appears to be a terminal length for simplicity reasons, but it can be at any part of the cable.

The removal of the protecting layers may be performed by making a cut, for example two cuts, essentially perpendicular to a longitudinal axis A of the power cable and stripping off the layers for a predetermined length. The resulting cut face C of the at least one protecting layer may be substantially flat.

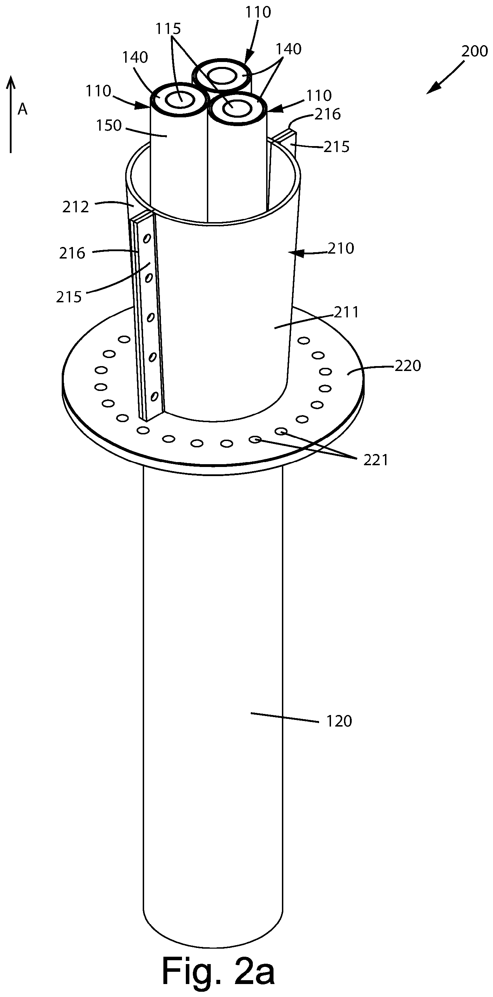

As from Figures 2a-2d, the hang-off assembly 200 comprises a frusto-conical tube 210 arranged around the length of the exposed cable cores 110 of the power +cable 100, and, optionally, an annular flange 220.

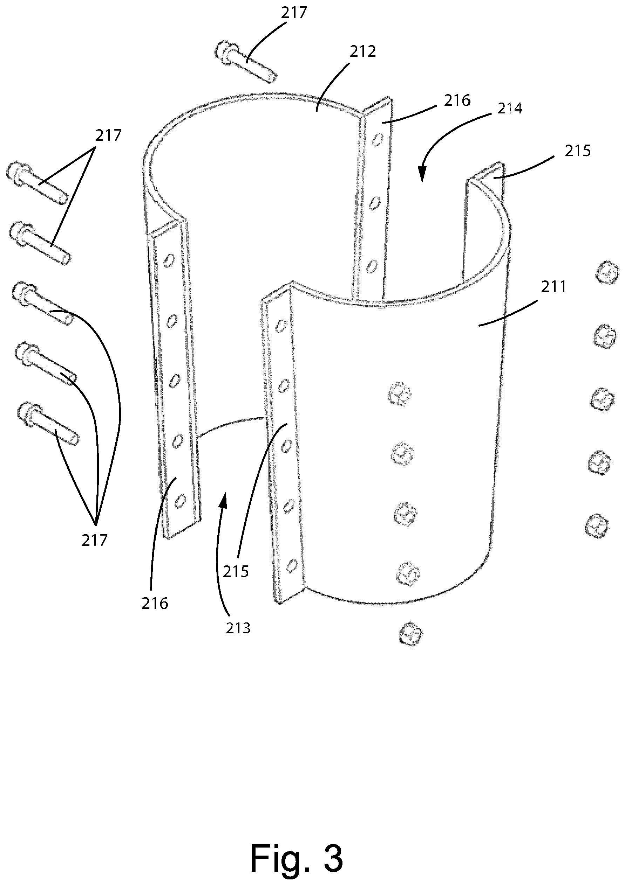

The frusto-conical tube 210 is made of two half-shells 211, 212 (see also Figure 3) coupled to each other and defining a first opening 213 and a second opening 214 opposite to the each other wherein the first opening 213 is circumferentially smaller than the second opening 214.

In an embodiment, the frusto-conical tube is made of metal, for example steel.

As illustrated, the two half-shells 211, 212 comprise respective flanges 215, 216 that allow coupling the half-shells one another. In an embodiment, the flanges 215, 216 may be joined together by first fixing elements 217 like, for example screws or pins, as from Figure 3.

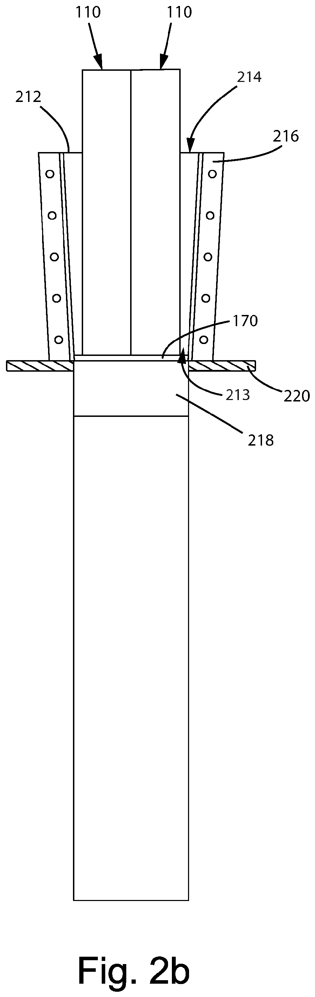

In an embodiment, the frusto-conical tube 210 comprises a collar 218 directly connected, e.g. by welding, to the first opening 213 and longitudinally lower thereto. In the embodiment of Fig.2b, the annular flange 220 is provided around the collar and in contact to the first opening 213 of the frusto-conical tube 210.

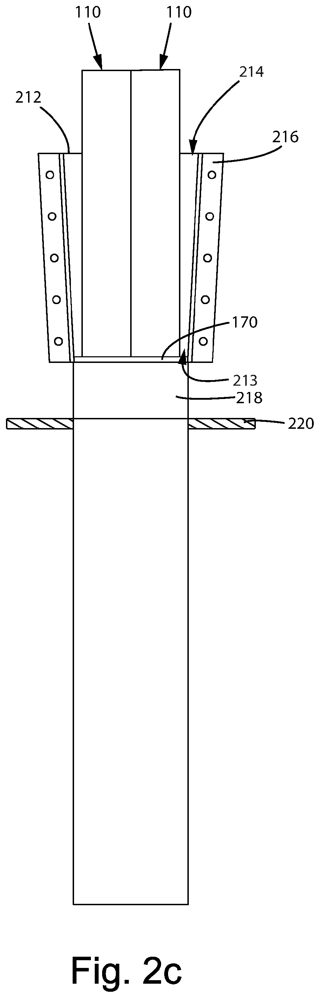

In the embodiment of Fig. 2c, the annular flange 220 is provided at a lower position with respect to the collar 218 and operatively connected thereto.

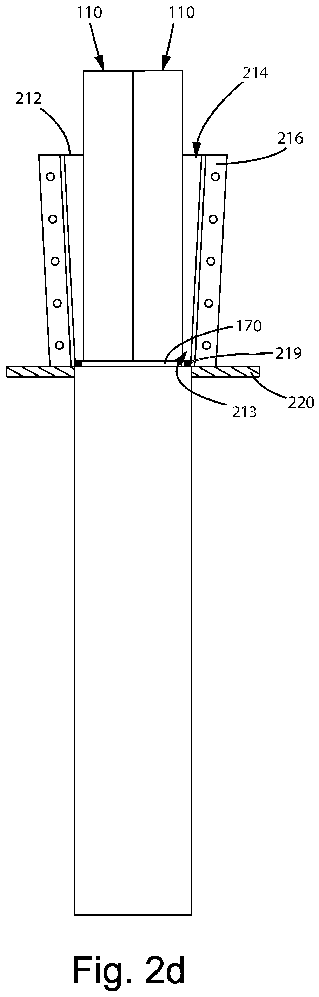

In the embodiment of Fig. 2d, the frusto-conical tube 210 comprises a ring 219 radially internal and welded to the first opening 213.

The optional presence of a collar 218 or of a ring 219 in the frusto-conical tube 210 may help in avoiding any slippage of the cured self-curing resin from the first opening 213 of the frusto-conical tube 210 when the system bears the power cable weight.

The frusto-conical tube 210, surrounding the exposed at least one cable core 110 of the power cable 100 and the cut face C, creates a space to be filled of a self-curing resin. In some instance, such space may also be defined by an annular flange 220.A self-curing resin suitable for the present disclosure may have a Shore hardness of 25 to 75 once cured, for example from 30 to 75 once cured. The self-curing resin may be a one-part or a two-part resin. In an embodiment, the self-curing resin is a polymeric resin. A polymeric resin suitable for the present disclosure may be selected, for example, from epoxy or polyurethane resins. For example, a self-curing resin suitable for the present invention is a low density two-part polyurethane resin marketed as BICON.

The optional annular flange 220 of the present hang-off system 200 is adapted to be coupled to the frusto-conical tube 210 and to an offshore structure. The annular flange 220 is made of two curved, for example semicircular, portions connected each other. In an embodiment, the annular flange 220 is operatively coupled to the first opening 213 of the frusto-conical tube 210, and radially surrounds the power cable 100 as a whole, i.e. in a position where the cable cores 110 are unexposed.

In an embodiment, the annular flange 220 is made of metal, for example steel.

In an embodiment, the annular flange 220 presents a plurality of holes 221 intended to be crossed by second fixing elements (not illustrated) like screws or pins. These fixing elements are intended for connecting the annular flange 220 to the offshore structure.

In an embodiment, a sealing element 218 may be provided on the cut face C (see Figure 2b). The sealing element may be applied where the layers overlying the cable core are cut to expose the at least one cable core and should be made to penetrate among the cable cores as far as possible.

In an embodiment, the sealing element 218 is made of a foaming material, for example based on polyurethane, applied by sprying, or of a mastic, for example in form of tapes, or both.

In the following a method for mounting the hang-off system will be described.

A power cable, for example a power cable 100 comprising an outermost layer, like outer sheath 150, and protecting layers surrounding the at least one cable core 110 is prepared by exposing a length of the at least one cable core 110. The exposing step is effected by removing the protecting layers and gives place to one cut face C or two, depending on the sought position of the exposed length of the cable core/s 110 along the cable longitudinal axis A. In the case of two cut faces, the lower one (cut face C) is the only involved in the hang-off system mounting according to the present disclosure.

While the power cable 100 is hold in a substantially vertical configuration substantially along the longitudinal axis A, the two half-shells 211, 212 are coupled to each other around the exposed length of the at least one cable core 110, thus obtaining the frusto-conical tube 220 as described above with the first opening 213 at a lower height with respect to the second opening 214. Then the method provides the step of pouring self-curing resin in uncured form between the frusto-conical tube 220 and the exposed length of the at least one cable core 110 and, finally, the step of letting the self-curing resin to cure adhere to the exposed length at least one cable core 110.

Before the coupling of the two half shells the method may comprise the step of mechanically abrading the outermost layer, like outer sheath 150, of the least one cable core 110 and/or applying an acrylate primer on such outermost layer. The primer can be a methylmetacrylate, optionally in two parts.

The method of the present disclosure may comprise the step of providing the annular flange 220 in operative connection to the frusto-conical tube 210. Depending on the presence and configuration of the collar 218 of the frusto-conical tube 210, the annular flange 220 may be provided in operative connection with the first opening 213 or with the collar 218t.

In an embodiment the two curved portiond of the annular flange 220 are connected each other around the power cable 100.

The annular flange 220 is provided where the at least one cable core 110 is unexposed.

The method of the present disclosure may comprise the step of providing a sealing element 218 on the cable cut face C at a lower portion of the exposed length of the at least one cable core 110. The sealing element 218 can be provided before the coupling the two half-shells 211, 212.

Once the frusto-conical tube 210 have been realized and after the curing of the self-curing resin, the cured self-curing resin adheres to the at least one cable core 110 (specifically to the outer sheath 150 thereof) and takes the form of the frusto-conical tube 210 which act as a mould. Due to the form of such mould, the now cured self-curing resin exert a compressive force suitable to sustain the power cable 100 by the adhesion to the cable core/s 110 110.

The selection of a self-curing resing having, once cured, a Shore D hardness from 25 to 75 once cured helps to effectively sustain the power cable without detachment of the core outer sheath or tearing thereof. When a self-curing resin with this hardness is subjected to the tensile strain due to the weight of the power cable, the resin helps to transfer the compressive force of the mould to the cable core/s as a whole, thus creating a mechanical congruence among the various parts (layers and conductor) of the cable core. With "mechanical congruence" it is meant the capacity of two or more parts of moving or withstand strain substantially as a whole. This congruence gives place to a distribution of the tensile strain and decrease the risk of tearing or slippage of a single layer, in particular the core outer sheath.

Test carried out by the Applicant showed that the hang-off system of the present disclosure is suitable for standing a tensile strain of 50kN or more. When the self-curing resin has a Shore D hardness from 25 to 75 once cured, for example of 40 once cured, the hang-off system of the present disclosure stood a tensile strain of 200kN or more.

## Claims

1. Hang-off assembly (200) for power cable (100) comprising at least one cable core (110) and at least one protecting layer (120, 160) radially external to the at least one cable core (110), the hang-off system (200) comprising:
- a frusto-conical tube (210) configured to be arranged around a length of the power cable where the at least one cores are exposed, the frusto-conical tube (210) being made of two half-shells (211, 212) coupled to each other and defining a first opening (213) and a second opening (214) opposite to the each other wherein the first opening (213) is circumferentially smaller than the second opening (214);
- a self-curing resin to be poured and cured between the frusto-conical tube (210) and the at least one cable core (110) of the power cable (100), adapted to adhere to the at least one cable core (110).

2. Hang-off assembly (200) according to claim 1 comprising an annular flange (220) made of two curved portions and operatively connected to an offshore structure and to the frusto-conical tube (210).

3. Hang-off assembly (200) according to claim 2 wherein the two curved portions of the annular flange (220) are two semicircular portions.

4. Hang-off assembly (200) according to claim 1 wherein the self-curing resin has a Shore D hardness of from 25 to 75 once cured.

5. Hang-off assembly (200) according to claim 1 wherein the self-curing resin is a polymeric resin is selected from a polyurethane based resin or an epoxy resin.

6. Hang-off assembly (200) according to claim 1 wherein the two half-shells (211, 212) comprise respective flanges (215, 216).

7. Hang-off assembly (200) according to claim 1 comprising a collar (218) directly connected to the first opening (213) of the frusto-conical tube (210) and longitudinally lower thereto.

8. Hang-off assembly (200) according to claim 1 comprising a ring (219) radially internal and welded to the first opening (213).

9. Hang-off system comprising:
- a power cable (100) comprising at least one cable core and at least one protecting layer radially external to the at least one cable core;
- a hang-off assembly (200) according to one or more of claims from 1 to 8 applied to the power cable, wherein the frusto-conical tube (210) is arranged around a length of the power cable (100) where the at least one cores are exposed and the cured self-curing resin is arranged between the frusto-conical tube (210) and the at least one cable core (110) of the power cable (100), said cured self-curing resin adhering to the at least one cable core.

10. Hang-off system according to claim 9 wherein the at least one protecting layer (120, 160) is an armour (120) consisting of at least one tape helically wound around the at least one cable core (110).

11. Method for mounting a hang-off system comprising the steps of:
- providing a power cable (100) comprising at least one cable core (110) comprising an outermost layer (150), and protecting layers (120, 160) surrounding the least one cable core (110);
- exposing a length of the at least one cable core (110) by removing the protecting layers (120, 160) to provide a cut face (C);
- holding the power cable (100) along a substantially vertical axis A;
- coupling two half-shells (211, 212) around the exposed length of the at least one cable core (110), thus obtaining a frusto-conical tube (210) with a first opening (213) at a lower height with respect to a second opening (214), the first opening (213) being circumferentially smaller than the second opening (214);
- pouring an uncured self-curing resin between the frusto-conical tube (210) and the exposed length of the at least one cable core (110) of the power cable (100);
- letting the self-curing resin to cure and adhere to the exposed length at least one cable core (110).

12. Method for mounting a hang-off system according to claim 11 comprising the step of providing an annular flange (220) in operative connection to the frustoconical tube (210).

13. Method for mounting a hang-off system according to claim 11 wherein before the coupling of the two half-shells (211, 212) said method comprises the step of:
- mechanically abrading an outermost layer of the least one cable core (110).

14. Method for mounting a hang-off system according to claim 11 wherein before the coupling of the two half-shells (211, 212) said method comprises the step of:
- applying an acrylate primer on an outermost layer (150) of the at least one cable core (110).

15. Method for mounting a hang-off system according to claim 11 comprising the step:
- providing a sealing element 170 on the cable cut face (C) at a lower portion of the exposed length of the at least one cable core (110).
